# EUROPÄISCHE PATENTANMELDUNG

(11) **EP 4 465 497 A1**
(43) Veröffentlichungstag der Anmeldung: **20.11.2024**
(21) Anmeldenummer: 23173703.2
(22) Anmeldetag: 16.05.2023
(51) Int. Cl.: H02K 3/38

(54) **DYNAMOELEKTRISCHE MASCHINE**

(71) Anmelder: Siemens Aktiengesellschaft, 80333 München (DE)
(72) Erfinder: Geis, Florian, 97640 Oberstreu (DE)
(74) Vertreter: Siemens Patent Attorneys

(57) **Zusammenfassung**

Die Erfindung betrifft eine dynamoelektrische Maschine (12), aufweisend: einen Stator (10), wobei an wenigstens einem axialen Ende des Stators (10) ein Wickelkopf (7) ausgebildet ist; wenigstens ein Lagerschild (1, 1b), wobei zur elektrischen Isolation des Lagerschilds (1, 1b) gegen den Wickelkopf (7) das Lagerschild (1, 1b) ein Isolationselement (2) aufweist.

## Beschreibung

Ein Asynchronmotor weist in der Regel ein Blechpaket auf, in welchem eine Wicklung eingelegt ist. Diese bildet meist Wickelköpfe an den Stirnseiten des Blechpakets. Es ist erforderlich, die Wickelköpfe gegen das Lagerschild elektrisch zu isolieren, um Abstände für Luft- und Kriechstrecken einhalten zu können.

Hierzu wird der Wickelkopf durch eine Vollbandage und/oder eine Wickelkopfkappe aus elektrisch isolierendem Material und/oder durch ausreichenden Luftabstand zum Lagerschild isoliert.

Eine Vollbandage verschlechtert jedoch die Entwärmung der Wicklung. Die Wickelkopfkappe wird meist gegossen, wofür eine Gussform benötigt wird. Dies ist zeitaufwändig und teuer. Eine elektrische Isolation durch einen großen Abstand zwischen Lagerschild und Wickelkopf vergrößert die Maschine unnötig.

Der Erfindung liegt die Aufgabe zugrunde, dies zu verbessern.

Die Lösung der Aufgabe gelingt durch Anspruch 1, d. h. eine dynamoelektrische Maschine, aufweisend:
- einen Stator, wobei an wenigstens einem axialen Ende des Stators ein Wickelkopf ausgebildet ist,
- wenigstens ein Lagerschild, wobei zur elektrischen Isolation des Lagerschilds gegen den Wickelkopf das Lagerschild ein Isolationselement aufweist.

Das Isolationselement kann als Schicht eines spannungsfesten Lacks ausgebildet sein.

Das Isolationselement kann auch als Folie ausgebildet sein. Die Folie ist vorteilhaft spannungsfest.

Das Isolationselement kann als Isolierpapier ausgebildet sein.

Das Isolationselement kann innerhalb und/oder außerhalb des Lagerschilds angeordnet sein.

Es ist möglich, dass das Lagerschild zwei oder sogar drei der genannten möglichen Ausbildungen des Isolationselements aufweist.

Das Lagerschild kann beispielsweise ein Isolationselement innerhalb und ein Isolationselement aufweisen.

Das Lagerschild kann auch innerhalb ein Isolierpapier und/oder eine Folie aufweisen und außerhalb mit Lack beschichtet sein. Auch andere Kombinationen und andere Isolationselemente sind denkbar.

Vorteilhaft ist das als Isolierpapier bzw. Folie ausgebildete Isolationselement in das Lagerschild eingelegt oder eingeklebt. Dies geht besonders schnell. Eine Klebung verhindert zudem ein Verrutschen.

Die Erfindung bietet den Vorteil, dass der Wickelkopf keine Wickelkopfkappe mehr benötigt. Somit muss keine Gussform hergestellt werden.

Die Erfindung bietet den Vorteil, dass der Wickelkopf keine Bandage, insbesondere Vollbandage, benötigt. Dies verbessert eine Entwärmung der Wicklung.

Zudem können Lagerschild und Wickelkopf eng beieinander liegend gefertigt werden, wodurch Bauraum eingespart wird. Ein Abstand zwischen Lagerschild und Wickelkopf kann dann vorteilhaft sogar kleiner sein als die in EN 61800-5-1 vorgeschriebenen Luft- und Kriechstrecken für 480 V-Netze (Luftstrecke: 3,0 mm; Kriechstrecke: 5,4 mm).

Die Lösung der Aufgabe gelingt ferner durch ein Lagerschild für eine dynamoelektrische Maschine, aufweisend wenigstens ein Isolationselement.

Das Isolationselement ist vorteilhaft als Schicht eines spannungsfesten Lacks ausgebildet und/oder als Folie ausgebildet und/oder als Isolierpapier ausgebildet.

Die Lösung der Aufgabe gelingt zudem durch ein Verfahren zur elektrischen Isolierung eines Lagerschilds, wobei ein spannungsfester Lack in und/oder auf das Lagerschild aufgebracht wird, insbesondere gesprüht wird, und/oder wobei eine Folie und/oder ein Isolierpapier in das Lagerschild eingezogen und/oder eingelegt wird.

Die Folie und/oder das Isolierpapier werden vorzugsweise eingeklebt.

Im Folgenden wird die Erfindung anhand der in den Figuren dargestellten Ausführungsbeispiele näher beschrieben und erläutert. Es zeigen:
- FIG 1: ein Lagerschild,
- FIG 2: eine Wickelkopfkappe,
- FIG 3: eine Wickelkopfkappe,
- FIG 4: einen Stator ohne Wickelkopfkappe,
- FIG 5: einen Stator mit Wickelkopfkappe,
- FIG 6: eine dynamoelektrische rotatorische Maschine mit dem Stator, einem Rotor, einer Welle sowie einem Lagerschild.

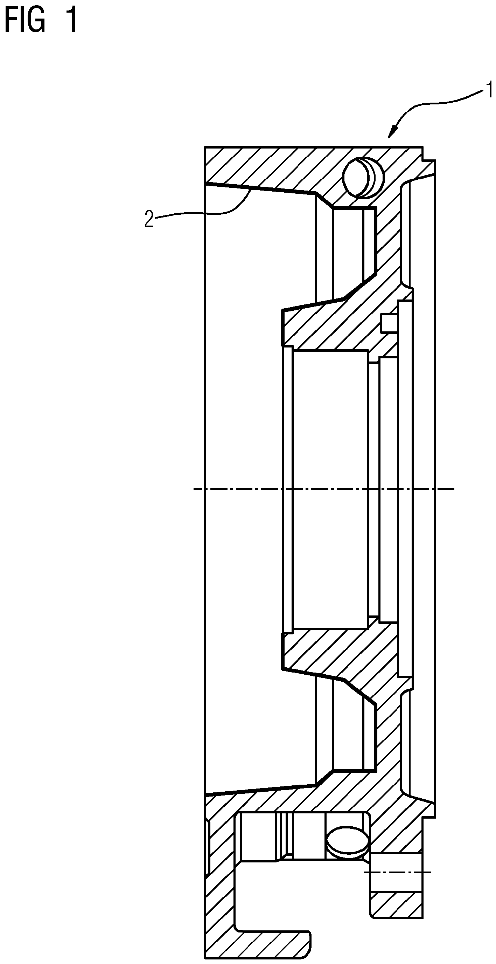

FIG 1 zeigt ein Lagerschild 1. Das Lagerschild 1 weist ein Isolationselement 2 auf. Das Isolationselement 2 ist beispielsweise ein spannungsfester Lack. Vorteilhaft wird der Lack durch Sprühen aufgebracht. Der Lack kann aber auch auf andere Weise aufgebracht werden.

Das Isolationselement 2 kann auch and anderer Stelle angeordnet sein.

Das Isolationselement 2 kann auch angebracht werden, indem eine Folie tiefgezogen wird, wobei die Folie vorteilhaft in und/oder auf das Lagerschild geklebt wird.

Alternativ oder zusätzlich kann ein Isolierpapier eingelegt werden, wobei ein Einkleben des Isolierpapiers von Vorteil ist, um beispielsweise ein Verrutschen zu verhindern.

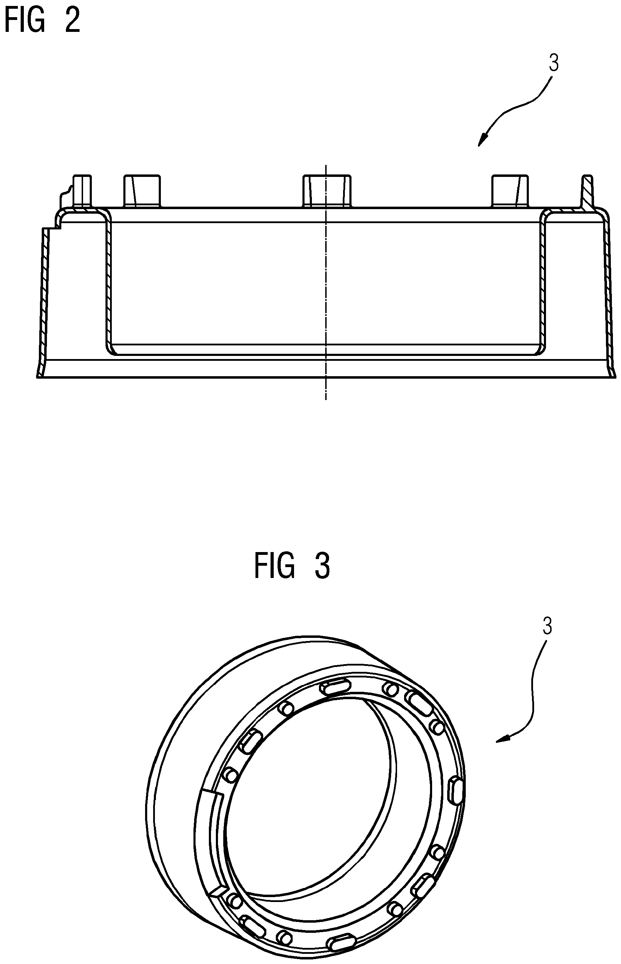

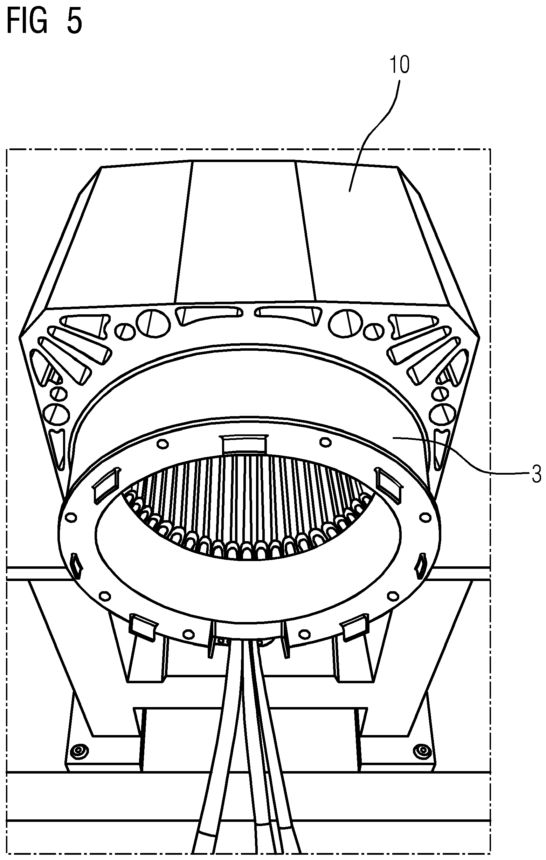

FIG 2 zeigt eine Wickelkopfkappe 3 aus dem Stand der Technik. Diese wird durch die Erfindung nicht länger benötigt. Auch FIG 3 zeigt eine Wickelkopfkappe 3. FIG 5 zeigt einen Stator 10 mit Wickelkopfkappe 3.

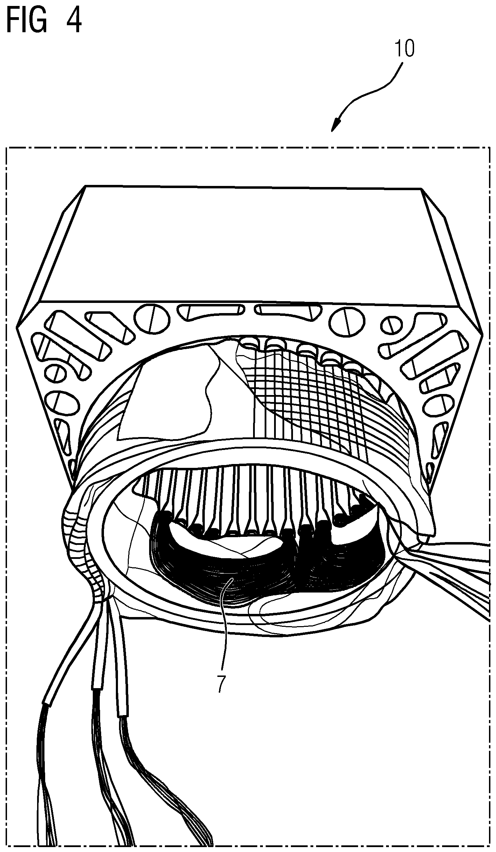

FIG 4 zeigt einen Stator 10 ohne Wickelkopfkappe. Das Lagerschild 1 mit dem Isolationselement 2, siehe FIG 1, kann eng an den Wickelkopf angebracht werden, da das Lagerschild 1 über die beschriebene elektrische Isolierung verfügt. So können Luft- und Kriechstrecken eingehalten werden.

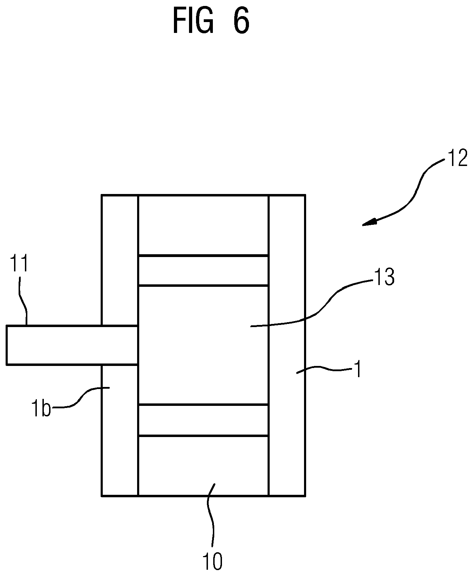

FIG 6 zeigt eine dynamoelektrische rotatorische Maschine 12 mit dem Stator 10, einem Rotor 13, einer Welle 11 sowie einem Lagerschild 1. Zudem zeigt die Figur ein weiteres Lagerschild 1b.

Durch Beschichtung des Lagerschilds mit elektrisch isolierendem Material bzw. durch die Folie und/oder das Isolierpaper werden die Luft und Kriechstrecken eingehalten.

## Patentansprüche

1. Dynamoelektrische Maschine (12), aufweisend:
- einen Stator (10), wobei an wenigstens einem axialen Ende des Stators (10) ein Wickelkopf (7) ausgebildet ist,
- wenigstens ein Lagerschild (1, 1b), wobei zur elektrischen Isolation des Lagerschilds (1, 1b) gegen den Wickelkopf (7) das Lagerschild (1, 1b) ein Isolationselement (2) aufweist.

2. Dynamoelektrische Maschine (12) nach Anspruch 1, wobei das Isolationselement (2) als Schicht eines spannungsfesten Lacks ausgebildet ist.

3. Dynamoelektrische Maschine (12) nach einem der vorhergehenden Ansprüche, wobei das Isolationselement (2) als Folie ausgebildet ist.

4. Dynamoelektrische Maschine (12) nach einem der vorhergehenden Ansprüche, wobei das Isolationselement (2) als Isolierpapier ausgebildet ist.

5. Dynamoelektrische Maschine (12) nach einem der vorhergehenden Ansprüche, wobei das Isolationselement (1, 1b) innerhalb und/oder außerhalb des Lagerschilds angeordnet ist.

6. Dynamoelektrische Maschine (12) nach einem der vorhergehenden Ansprüche, wobei das als Isolierpapier bzw. Folie ausgebildete Isolationselement (2) in das Lagerschild (1, 1b) eingelegt oder eingeklebt ist.

7. Dynamoelektrische Maschine (12) nach einem der vorhergehenden Ansprüche, wobei der Wickelkopf (7) keine Wickelkopfkappe (3) aufweist.

8. Dynamoelektrische Maschine (12) nach einem der vorhergehenden Ansprüche, wobei der Wickelkopf (7) keine Vollbandage aufweist.

9. Dynamoelektrische Maschine (12) nach einem der vorhergehenden Ansprüche, wobei eine Lufstrecke zwischen Lagerschild (1, 1b) und Wickelkopf (3) weniger als 3,0 mm und/oder eine Kriechstrecke weniger als 5,4 mm ist.

10. Lagerschild (1, 1b) für eine dynamoelektrische Maschine (12) nach einem der vorhergehenden Ansprüche, aufweisend wenigstens ein Isolationselement (2).

11. Lagerschild (1, 1b) nach Anspruch 10, wobei das Isolationselement (2) als Schicht eines spannungsfesten Lacks ausgebildet ist und/oder als Folie ausgebildet ist und/oder als Isolierpapier ausgebildet ist.

12. Verfahren zur elektrischen Isolierung eines Lagerschilds (1, 1b), wobei ein spannungsfester Lack in und/oder auf das Lagerschild aufgebracht wird, insbesondere gesprüht wird, und/oder wobei eine Folie und/oder ein Isolierpapier in das Lagerschild eingezogen und/oder eingelegt wird.

13. Verfahren nach Anspruch 12, wobei die Folie und/oder das Isolierpapier eingeklebt werden.
